# EUROPEAN PATENT APPLICATION

(11) **EP 4 806 927 A1**
(43) Date of publication of application: **16.09.2026**
(21) Application number: 25162564.6
(22) Date of filing: 10.03.2025
(51) Int. Cl.: C08F 8/50, C08F 210/06, C08J 5/18, C08K 5/14, C08L 23/14

(54) **VISBREAKING OF HETEROPHASIC PROPYLENE-ETHYLENE COPOLYMERS**

(71) Applicant: Borealis GmbH, 1020 Vienna (AT)
(72) Inventor: MOLNAR, Janos, 4021 Linz (AT); WANG, Jingbo, 4021 Linz (AT); SCHININGER, Renate, 4021 Linz (AT); TRANNINGER, Cornelia Anita, 4021 Linz (AT); DOSHEV, Petar Emilov, 4021 Linz (AT)
(74) Representative: Maiwald GmbH

(57) **Abstract**

The present invention relates to a process for producing a heterophasic propylene-ethylene copolymer via visbreaking using specific peroxide radical initiators, to certain heterophasic propylene-ethylene copolymers defined by a storage modulus ratio (G'₀₀₃)/(G'₀₀₁), and to films comprising said heterophasic propylene-ethylene copolymers.

## Description

### Field of the Invention

The present invention relates to a process for producing a heterophasic propylene-ethylene copolymer via visbreaking using specific peroxide radical initiators, to certain heterophasic propylene-ethylene copolymers defined by a storage modulus ratio (G'_{0.03})/(G'_{0.01}), and to films comprising said heterophasic propylene-ethylene copolymers.

### Background to the Invention

The controlled preparation of polyolefin grades (polymer types having different molar masses, melt viscosities, densities, molar mass distributions, etc.) by customary compounding methods, for example by reactive extrusion, is a routine process employed by polymer manufacturers and polymer processors/ compounders.

The setting of the desired parameters, for example the melt viscosity, by means of this polymer process step is critically dependent on the controlled reactivity and mode of action of the reactive modifiers employed.

The use of free-radical initiators for modifying the melt viscosity (rheology) of polyolefins is a generally known method. Whether it results in a lowering of the molecular weight (degradation) or an increase in the molecular weight (crosslinking) depends primarily on the chemical structure of the polyolefin.

The reaction of a polymer of the polypropylene type with a free-radical former during a polymer-processing process generally results in the degradation of the polymer, whereas polymers of the polyethylene type tend to crosslink.

The controlled degradation of polypropylene (PP) to give a product having a lower molecular weight and a narrower molecular weight distribution is a commercially important process for producing 'controlled rheology' polypropylene (CR-PP). While specific PP grades ("reactor grades") are obtainable by optimisation of the synthesis process or the catalyst systems (metallocene catalyst, Ziegler catalyst), standard PP grades are frequently modified in process technology by means of a processing step following the synthesis.

Known degradation processes proceed either thermally, in particular at temperatures above 280 °C, or in the presence of free-radical generators. In process technology, the free-radical induced process is carried out in extruders at temperatures above 180 °C. Free-radical generators used are organic peroxides, which are added during the processing step in diluted form (PP Mastermix, diluted in oil, stabilized on inorganic supports) or directly as a solid or liquid. Under the given processing conditions, the peroxide decomposes into free radicals, which initiate the chain cleavage reactions and form polymers having the desired rheological properties (melt viscosities). The degradation of a PP to form a product having a lower molecular weight (higher melt flow rate (MFR)) and most importantly, a lower melt viscosity is generally referred to as a viscosity-breaking or vis-breaking process.

CR-PP grades are mainly used for film, fibre applications and injection-moulding applications in which low melt viscosities are a prerequisite for economical processing. A wide range of melt viscosities or molecular weights is nowadays required in process technology.

A further parameter that influences the processing behaviour of the polymer, in addition to the molecular weight, is the molecular weight distribution (MWD). While polymer grades having broad MWDs display improved orientation behaviour of the polymer chains, at low pull-off speeds in a fibre spinning process, the reverse is the case for high pull-off speeds and broad MWDs. For this reason, narrow MWDs are essential at high pull-off speeds in order to achieve improved continuity in the spinning process.

Whilst visbreaking has been used for many years, especially in the field of Ziegler-Natta catalyzed polypropylenes, to improve processibility and some optical properties (e.g. surface smoothness), other properties, such as stiffness and colour are known to deteriorate as a result of visbreaking. Furthermore, organic small molecules may be formed as a byproduct of the visbreaking process, which can lead to unwanted odors.

As such, there is a continuing need to develop new visbreaking procedures that avoid many of the downsides known in the art, in particular with regard to optical, mechanical, and emission properties.

### Summary of the Invention

It is the finding of the present invention that judicious choice of the radical initiator can help to achieve these goals in the context of the visbreaking of heterophasic propylene-ethylene copolymers.

In a first aspect, the present invention is directed to a process for producing a heterophasic propylene-ethylene copolymer (HECO) having a melt flow rate (MFR₂), determined according to ISO 1133 at a temperature of 230 °C and a load of 2.16 kg, in the range from 1.0 to 20.0 g/10 min, comprising the following steps, in the given order:
a) providing a precursor heterophasic propylene-ethylene copolymer (HECO-P) having a melt flow rate (MFR₂), determined according to ISO 1133 at a temperature of 230 °C and a load of 2.16 kg, in the range from 0.10 to 5.0 g/10 min;
b) extruding a mixture of the precursor heterophasic propylene-ethylene copolymer (HECO-P) and one or more peroxide radical initiators (POX), thereby obtaining the heterophasic propylene-ethylene copolymer (HECO),
wherein each of the one or more peroxide radical initiators (POX) has a solubility parameter (SP), determined according to the method given in the measurement methods at 225 °C, of at least 14.6 MPa^{1/2}.

In a second aspect, the present invention is directed to a heterophasic propylene-ethylene copolymer (HECO), having all of the following properties:
a) a melt flow rate (MFR₂), determined according to ISO 1133 at a temperature of 230 °C and a load of 2.16 kg, in the range from 1.0 to 20.0 g/10 min;
b) a soluble fraction (SF) content, determined by CRYSTEX analysis, in the range from 5.0 to 20.0 wt.-% and a crystalline fraction (CF) content, determined by CRYSTEX analysis, in the range from 80.0 to 95.0 wt.-%;
c) an ethylene content of the soluble fraction (C2(SF)), determined by CRYSTEX analysis, in the range from 20.0 to 40.0 wt.-%;
d) an intrinsic viscosity of the soluble fraction (iV(SF)), determined by CRYSTEX analysis, in the range from 0.50 to 2.00 dL/g; and
e) a ratio between the storage modulus at 0.03 rad/s (G'_{0.03}) and at 0.01 rad/s (G'_{0.01}) [(G'_{0.03})/(G'_{0.01})], both determined according to ISO 6721-10 at 230 °C, in the range from 1.0 to 4.0.

In a third aspect, the present invention is directed to a heterophasic propylene-ethylene copolymer (HECO), which is obtainable, more preferably obtained, by the process of the first aspect.

In a final aspect, the present invention is directed to a film comprising at least 90 wt.-% of a heterophasic propylene-ethylene copolymer (HECO) according to the second aspect or the third aspect.

### Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene random copolymer is a copolymer of propylene monomer units and comonomer units, preferably selected from ethylene and C₄-C₈ alpha-olefins, in which the comonomer units are distributed randomly over the polymeric chain. The propylene random copolymer can comprise comonomer units from one or more comonomers different in their amounts of carbon atoms.

Heterophasic propylene copolymers typically comprise:
a) a crystalline propylene homopolymer or copolymer matrix (M); and
b) an elastomeric rubber, preferably a propylene-ethylene copolymer (E).

In case of a random heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

The present invention will now be described in more detail.

### Detailed Description

### The process

In a first aspect, the present invention is directed to a process for producing a heterophasic propylene-ethylene copolymer (HECO) having a melt flow rate (MFR₂), determined according to ISO 1133 at a temperature of 230 °C and a load of 2.16 kg, in the range from 1.0 to 20.0 g/10 min, comprising the following steps, in the given order:
a) providing a precursor heterophasic propylene-ethylene copolymer (HECO-P) having a melt flow rate (MFR₂), determined according to ISO 1133 at a temperature of 230 °C and a load of 2.16 kg, in the range from 0.10 to 5.0 g/10 min;
b) extruding a mixture of the precursor heterophasic propylene-ethylene copolymer (HECO-P) and one or more peroxide radical initiators (POX), thereby obtaining the heterophasic propylene-ethylene copolymer (HECO),
wherein each of the one or more peroxide radical initiators (POX) has a solubility parameter (SP), determined according to the method given in the measurement methods at 225 °C, of at least 14.6 MPa^{1/2}.

Preferred mixing devices suited for the visbreaking of step b) are discontinuous and continuous kneaders, twin screw extruders and single screw extruders with special mixing sections and co-kneaders.

By visbreaking the precursor heterophasic propylene copolymer (HECO-P) with one or more peroxide radical initiators (POX), the molar mass distribution (MWD) becomes narrower because the long molecular chains are more easily broken up or scissored and the molar mass Mw, will decrease, corresponding to an MFR₂ increase. The MFR₂ increase scales with the amount of peroxide which is used.

In the context of the present invention, the visbreaking ratio, i.e. the ratio between the MFR₂ of the heterophasic propylene-ethylene copolymer (HECO) to the MFR₂ of the precursor heterophasic propylene-ethylene copolymer (HECO-P), [MFR₂(HECO)/MFR₂(HECO-P)] is greater than 1.0, more preferably in the range from 2.0 to 15.0, yet more preferably in the range from 4.0 to 12.0, most preferably in the range from 5.0 to 9.0.

Suitable amounts of peroxide to be employed in accordance with the present invention are in principle known to the skilled person and can easily be calculated on the basis of the amount of precursor heterophasic propylene-ethylene copolymer (HECO-P) to be subjected to visbreaking, the MFR₂ (230 °C/2.16 kg) value of the precursor heterophasic propylene-ethylene copolymer (HECO-P) to be subjected to visbreaking and the desired target MFR₂ (230 °C/2.16 kg) of the product to be obtained. Accordingly, typical amounts of peroxide visbreaking agent are from 0.005 to 0.7 wt.-%, more preferably from 0.01 to 0.4 wt.-%, based on the total amount of precursor heterophasic propylene-ethylene copolymer (HECO-P) employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

In addition to the one or more peroxide radical initiators (POX), the extrusion of step b) may involve the addition of one or more further additives (A).

If present, the one or more additives (A) are provided in an amount in the range from 0.0 to 10.0 wt.-%, more preferably in the range from 0.0 to 5.0 wt.-%, most preferably in the range from 0.0 to 2.0 wt.-%, relative to the total weight of the precursor heterophasic propylene-ethylene copolymer (HECO-P). In some embodiments, the one or more additives (A) are provided in an amount in the range from 0.01 to 10.0 wt.-%, more preferably in the range from 0.01 to 5.0 wt.-%, most preferably in the range from 0.01 to 2.0 wt.-%, relative to the total weight of the precursor heterophasic propylene-ethylene copolymer (HECO-P).

The selection of suitable additives for the visbreaking of step b) is within the general knowledge of the person skilled in the art.

For example, the one or more additives (A) may be selected from the group consisting of antioxidants, stabilizers, fillers, nucleating agents, acid scavengers, and antistatic agents.

Such additives are generally commercially available and are described, for example, in "Plastic Additives Handbook", pages 871 to 873, 5th edition, 2001 of Hans Zweifel.

It is understood that the content of additives (A), given with respect to the total weight of precursor heterophasic propylene-ethylene copolymer (HECO-P), includes any carrier polymers used to introduce the additives to step b), i.e. masterbatch carrier polymers. An example of such a carrier polymer would be a polypropylene homopolymer in the form of powder.

### The one or more peroxide radical initiators (POX)

In the process of the first aspect, a visbreaking agent is used to initiate radical mediated chain scission events, resulting in a decrease in the chain length and thus an increase in the melt flow rate.

In the context of the present invention, this visbreaking agent is one or more peroxide radical initiators (POX).

By selecting appropriate initiator(s), the resultant visbroken HECO may have improved properties, such as improved appearance (yellowness index), as well as improved mechanical properties (e.g. balance of tensile modulus and Charpy NIS) and improved emission properties, relative to compositions obtained using other peroxide radical initiators.

Each of the one or more peroxide radical initiators (POX) has a solubility parameter (SP), determined according to the method given in the measurement methods at 225 °C, of at least 14.6 MPa^{1/2}, more preferably at least 14.8 MPa^{1/2}, most preferably at least 15.0 MPa^{1/2}.

It has been well established in the literature that the smaller the difference in solubility of two compounds is, the more miscible they are. The well-known solubility parameter (SP) can be used to estimate the miscibility between substances: two substances with equal solubility parameters should be mutually soluble due to the negative entropy value. This is in accordance with the general rule that chemical and structural similarity favours solubility.

Considering the solubility parameter when selecting a peroxide-alongside other crucial factors like half-life-could systematically guide the search for alternative POXs. Measuring the solubility parameters is time-consuming. Therefore, the use of theoretical estimations, despite their limitations and inaccuracies, are widely used [Van Krevelen, D.W. and K. Te Nijenhuis, Properties of polymers: their correlation with chemical structure; their numerical estimation and prediction from additive group contributions. 2009: Elsevier.]. These estimation methods provide a simple approach to predict and correlate the solubility behaviour between two components. The earliest estimation method based on cohesive energy density is a one-component model, developed by Hildebrand and Scott. Two, three and multicomponent models were developed with improving prediction power. The most widely used are the three-parameter approaches (Hansen, Hoy and Van Krevelen). These methods can provide a rough estimation of the solubility parameter when there is no data available. The two most frequently published methods are the Hoftyzer and Van Krevelen and the Hoy method [. Gao, J., Using Hansen Solubility Parameters (HSPs) to develop antioxidant-packaging film to achieve controlled release. 2014: Michigan State University.], but the method of Fedors is also commonly used in polymer chemistry [Williams, L.L., J.B. Rubin, and H. Edwards, Calculation of Hansen solubility parameter values for a range of pressure and temperature conditions, including the supercritical fluid region. Industrial & engineering chemistry research, 2004. 43(16): p. 4967-4972.]. The accuracy of estimating the solubility parameters with the Hoftyzer-Van Krevelen and Hoy methods are in the same order [Van Krevelen, D.W. and K. Te Nijenhuis, Properties of polymers: their correlation with chemical structure; their numerical estimation and prediction from additive group contributions. 2009: Elsevier.]. A good approach is to apply both methods and take the average of the results [Van Krevelen, D.W. and K. Te Nijenhuis, Properties of polymers: their correlation with chemical structure; their numerical estimation and prediction from additive group contributions. 2009: Elsevier.].

It is preferred that each of the one or more peroxide radical initiators (POX) has a half-life (t_{1/2}), determined according to the method given in the measurement methods at 225 °C, in the range from 0.05 to 2.00 s, more preferably in the range from 0.05 to 1.00 s, yet more preferably in the range from 0.05 to 0.50 s, most preferably in the range from 0.05 to 0.30 s

It is further preferred that each of the one or more peroxide radical initiators (POX) is selected from the group consisting of tert-butylperoxy isopropyl carbonate, 2,2-di(tert-butylperoxy)butane, tert-butyl cumyl peroxide, bis(tert-butyldioxyisopropyl)benzene, and mixtures thereof.

Most preferably only one peroxide radical initiator (POX) is used, which is preferably tert-butylperoxy isopropyl carbonate.

As would be well known to the person skilled in the art, the amount of the one or more peroxide radical initiators (POX) controls the visbreaking ratio. It is within the skills of the person skilled in the art to select or routinely optimise the amount of the one or more peroxide radical initiators (POX) in order to achieve a given visbreaking ratio.

### The precursor heterophasic propylene-ethylene copolymer (HECO-P)

The precursor heterophasic propylene-ethylene copolymer (HECO-P) of the first aspect has a melt flow rate (MFR₂), determined according to ISO 1133 at a temperature of 230 °C and a load of 2.16 kg, in the range from 0.1 to 5.0 g/10 min, more preferably in the range from 0.2 to 3.0 g/10 min, most preferably in the range from 0.3 to 1.0 g/10 min.

The precursor heterophasic propylene-ethylene copolymer (HECO-P) of the first aspect may be characterized according to the CRYSTEX QC method using trichlorobenzene (TCB) as a solvent. This method is described below in the measurement methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data (than for example xylene cold soluble-based methods), since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amount of polymer assigned to the matrix phase and elastomeric phase can differ as well as the properties of the polymers assigned to these phases.

The precursor heterophasic propylene-ethylene copolymer (HECO-P) of the first aspect preferably has a soluble fraction (SF) content, determined by CRYSTEX analysis, in the range from 5.0 to 20.0 wt.-%, more preferably in the range from 8.0 to 18.0 wt.-%, most preferably in the range from 10.0 to 16.0 wt.-%, and a crystalline fraction (CF) content, determined by CRYSTEX analysis, in the range from 80.0 to 95.0 wt.-%, more preferably in the range from 82.0 to 92.0 wt.-%, most preferably in the range from 84.0 to 90.0 wt.-%.

The precursor heterophasic propylene-ethylene copolymer (HECO-P) of the first aspect preferably has an ethylene content of the soluble fraction (C2(SF)), determined by CRYSTEX analysis, in the range from 20.0 to 40.0 wt.-%, more preferably in the range from 25.0 to 39.0 wt.-%, most preferably in the range from 30.0 to 38.0 wt.-%.

The precursor heterophasic propylene-ethylene copolymer (HECO-P) of the first aspect preferably has an ethylene content of the crystalline fraction (C2(CF)), determined by CRYSTEX analysis, in the range from 0.0 to 7.0 wt.-%, more preferably in the range from 1.5 to 6.0 wt.-%, most preferably in the range from 3.0 to 5.0 wt.-%.

The precursor heterophasic propylene-ethylene copolymer (HECO-P) of the first aspect preferably has a total ethylene content (C2(total)), determined by CRYSTEX analysis, in the range from 4.0 to 11.0 wt.-%, more preferably in the range from 5.0 to 10.0 wt.-%, most preferably in the range from 6.0 to 9.0 wt.-%.

The precursor heterophasic propylene-ethylene copolymer (HECO-P) of the first aspect preferably has an intrinsic viscosity of the soluble fraction (iV(SF)), determined by CRYSTEX analysis, in the range from 1.00 to 3.00 dL/g, more preferably in the range from 1.40 to 2.50 dL/g, most preferably in the range from 1.70 to 2.20 dL/g.

The precursor heterophasic propylene-ethylene copolymer (HECO-P) of the first aspect preferably has an intrinsic viscosity of the crystalline fraction (iV(CF)), determined by CRYSTEX analysis, in the range from 2.00 to 4.00 dL/g, more preferably in the range from 2.50 to 3.70 dL/g, most preferably in the range from 2.90 to 3.40 dL/g.

The precursor heterophasic propylene-ethylene copolymer (HECO-P) of the first aspect preferably comprises:
i) a crystalline matrix (M) being a propylene homopolymer; and
ii) an amorphous propylene-ethylene elastomer (E),
wherein the crystalline matrix component (M) is free from 2,1-regiodefects, as determined by quantitative ¹³C-NMR spectroscopy. The absence of 2,1-regiodefects is typical for polypropylenes polymerized using Ziegler-Natta catalysts.

Preferably, the precursor heterophasic propylene-ethylene copolymer (HECO-P) of the first aspect has been polymerized in the presence of a Ziegler-Natta catalyst.

The heterophasic propylene-ethylene copolymer produced according to the process of **the first aspect.**

The heterophasic propylene-ethylene copolymer (HECO) produced according to the process of the first aspect has a melt flow rate (MFR₂), determined according to ISO 1133 at a temperature of 230 °C and a load of 2.16 kg, in the range from 1.0 to 20.0 g/10 min, more preferably in the range from 1.5 to 15.0 g/10 min, most preferably in the range from 2.0 to 10.0 g/10 min.

The heterophasic propylene-ethylene copolymer (HECO) produced according to the process of the first aspect preferably has a soluble fraction (SF) content, determined by CRYSTEX analysis, in the range from 5.0 to 20.0 wt.-%, more preferably in the range from 8.0 to 18.0 wt.-%, most preferably in the range from 10.0 to 16.0 wt.-%, and a crystalline fraction (CF) content, determined by CRYSTEX analysis, in the range from 80.0 to 95.0 wt.-%, more preferably in the range from 82.0 to 92.0 wt.-%, most preferably in the range from 84.0 to 90.0 wt.-%.

The heterophasic propylene-ethylene copolymer (HECO) produced according to the process of the first aspect preferably has an ethylene content of the soluble fraction (C2(SF)), determined by CRYSTEX analysis, in the range from 20.0 to 40.0 wt.-%, more preferably in the range from 25.0 to 39.0 wt.-%, most preferably in the range from 30.0 to 38.0 wt.-%.

The heterophasic propylene-ethylene copolymer (HECO) produced according to the process of the first aspect preferably has an ethylene content of the crystalline fraction (C2(CF)), determined by CRYSTEX analysis, in the range from 0.0 to 7.0 wt.-%, more preferably in the range from 1.5 to 6.0 wt.-%, most preferably in the range from 3.0 to 5.0 wt.-%.

The heterophasic propylene-ethylene copolymer (HECO) produced according to the process of the first aspect preferably has a total ethylene content (C2(total)), determined by CRYSTEX analysis, in the range from 4.0 to 11.0 wt.-%, more preferably in the range from 5.0 to 10.0 wt.-%, most preferably in the range from 6.0 to 9.0 wt.-%.

The heterophasic propylene-ethylene copolymer (HECO) produced according to the process of the first aspect preferably has an intrinsic viscosity of the soluble fraction (iV(SF)), determined by CRYSTEX analysis, in the range from 0.50 to 2.00 dL/g, more preferably in the range from 1.00 to 1.80 dL/g, most preferably in the range from 1.20 to 1.70 dL/g.

The heterophasic propylene-ethylene copolymer (HECO) produced according to the process of the first aspect preferably has an intrinsic viscosity of the crystalline fraction (iV(CF)), determined by CRYSTEX analysis, in the range from 1.00 to 3.00 dL/g, more preferably in the range from 1.50 to 2.70 dL/g, most preferably in the range from 1.90 to 2.40 dL/g.

It is a finding of the present invention that by selecting an appropriate visbreaking agent, low frequency dynamic rheological behaviour can be controlled in a manner that cannot be obtained via conventional means (i.e. control of the reactor conditions) or by normal visbreaking conditions. In addition to effecting visbreaking, peroxide radical initiators can promote the long chain branching (LCB), which particularly affects low frequency dynamic rheological behaviour.

As such, the heterophasic propylene-ethylene copolymer (HECO) produced according to the process of the first aspect preferably has a ratio between the storage modulus at 0.03 rad/s (G'_{0.03}) and at 0.01 rad/s (G'_{0.01}) [(G'_{0.03})/(G'_{0.01})], both determined according to ISO 6721-10 at 230 °C, in the range from 1.0 to 4.0, more preferably in the range from 1.3 to 3.5, most preferably in the range from 1.5 to 3.0.

The heterophasic propylene-ethylene copolymer (HECO) produced according to the process of the first aspect preferably has a phase angle (ϕ) value at a complex modulus (G*) of 30 Pa, determined by the method given in the measurement methods, of below 86 °, more preferably of below 84 °, most preferably of below 82 °.

The heterophasic propylene-ethylene copolymer (HECO) produced according to the process of the first aspect preferably comprises:
i) a crystalline matrix (M) being a propylene homopolymer; and
ii) an amorphous propylene-ethylene elastomer (E),
wherein the crystalline matrix component (M) is free from 2,1-regiodefects, as determined by quantitative ¹³C-NMR spectroscopy. The absence of 2,1-regiodefects is typical for polypropylenes polymerized using Ziegler-Natta catalysts.

The heterophasic propylene-ethylene copolymer (HECO) produced according to the process of the first aspect preferably has a yellowness index, determined according to ISO 11664, in the range from -4.00 to -2.00, more preferably in the range from -3.90 to -3.00, most preferably in the range from -3.80 to -3.40.

The heterophasic propylene-ethylene copolymer (HECO) produced according to the process of the first aspect preferably has a gel index, determined according to the method given in the measurement methods, in the range from 0 to 50, more preferably in the range from 0 to 20, most preferably in the range from 0 to 10.

The heterophasic propylene-ethylene copolymer (HECO) produced according to the process of the first aspect preferably has a content of low-boiling organic substances (LBS), determined according to the method given in the measurement methods, in the range from 0 to 150 µg/g, more preferably in the range from 0 to 100 µg/g, most preferably in the range from 0 to 70 µg/g.

The heterophasic propylene-ethylene copolymer (HECO) produced according to the process of the first aspect preferably has a content of high-boiling organic substances (HBS), determined according to the method given in the measurement methods, in the range from 0 to 150 µg/g, more preferably in the range from 0 to 100 µg/g, most preferably in the range from 0 to 70 µg/g.

The heterophasic propylene-ethylene copolymer (HECO) produced according to the process of the first aspect preferably has a total volume or organic compounds (TVOC), determined according to VDA277, in the range from 0 to 200 µgC/g, more preferably in the range from 50 to 170 µgC/g, most preferably in the range from 100 to 150 µgC/g.

The heterophasic propylene-ethylene copolymer (HECO) produced according to the process of the first aspect preferably has a fogging gravimetric, determined according to DIN 75201:2011-11 Method B, in the range from 0.00 to 0.30 mg, more preferably in the range from 0.05 to 0.24 mg, most preferably in the range from 0.10 to 0.18 mg.

The heterophasic propylene-ethylene copolymer (HECO) produced according to the process of the first aspect preferably has a tensile modulus, determined according to ISO 527-2 on a specimen of Tensile type 1A, in the range from 800 to 2000 MPa, more preferably in the range from 900 to 1700 MPa, most preferably in the range from 1000 to 1400 MPa.

The heterophasic propylene-ethylene copolymer (HECO) produced according to the process of the first aspect preferably has a tensile strength, determined according to ISO 527-2 on a specimen of Tensile type 1A, in the range from 10 to 50 MPa, more preferably in the range from 15 to 40 MPa, most preferably in the range from 20 to 30 MPa.

The heterophasic propylene-ethylene copolymer (HECO) produced according to the process of the first aspect preferably has a Charpy Notched impact strength at +23 °C, determined according to ISO 179 using 80×10×4 mm³ test bars injection-moulded in line with ISO 19069-2, in the range from 8.0 to 50.0 kJ/m², more preferably in the range from 10.0 to 30.0 kJ/m², most preferably in the range from 12.0 to 20.0 kJ/m².

The heterophasic propylene-ethylene copolymer (HECO) produced according to the process of the first aspect preferably has a Charpy Notched impact strength at -20 °C, determined according to ISO 179 using 80×10×4 mm³ test bars injection-moulded in line with ISO 19069-2, in the range from 2.0 to 15.0 kJ/m², more preferably in the range from 3.0 to 10.0 kJ/m², most preferably in the range from 4.0 to 7.0 kJ/m².

The heterophasic propylene-ethylene copolymer (HECO) produced according to the process of the first aspect preferably has a puncture energy at +23 °C, measured according to ISO 6603-2 using injection-moulded specimens of 60×60×2 mm³ and a test speed of 4.4 m/s, in the range from 15.0 to 50.0 J, more preferably in the range from 19.0 to 40.0 J, most preferably in the range from 22.0 to 30.0 J.

The heterophasic propylene-ethylene copolymer (HECO) produced according to the process of the first aspect preferably has a puncture energy at -20 °C, measured according to ISO 6603-2 using injection-moulded specimens of 60×60×2 mm³ and a test speed of 4.4 m/s, in the range from 10.0 to 50.0 J, more preferably in the range from 14.0 to 40.0 J, most preferably in the range from 18.0 to 30.0 J.

In a third aspect, the present invention is directed to a heterophasic propylene-ethylene copolymer (HECO), which is obtainable, more preferably obtained, by the process of the first aspect.

The heterophasic propylene-ethylene copolymer (HECO) of the second aspect

In a second aspect, the present invention is directed to a heterophasic propylene-ethylene copolymer (HECO).

The heterophasic propylene-ethylene copolymer (HECO) of the second aspect has a melt flow rate (MFR₂), determined according to ISO 1133 at a temperature of 230 °C and a load of 2.16 kg, in the range from 1.0 to 20.0 g/10 min, more preferably in the range from 1.5 to 15.0 g/10 min, most preferably in the range from 2.0 to 10.0 g/10 min.

The heterophasic propylene-ethylene copolymer (HECO) of the second aspect has a soluble fraction (SF) content, determined by CRYSTEX analysis, in the range from 5.0 to 20.0 wt.-%, more preferably in the range from 8.0 to 18.0 wt.-%, most preferably in the range from 10.0 to 16.0 wt.-%, and a crystalline fraction (CF) content, determined by CRYSTEX analysis, in the range from 80.0 to 95.0 wt.-%, more preferably in the range from 82.0 to 92.0 wt.-%, most preferably in the range from 84.0 to 90.0 wt.-%.

The heterophasic propylene-ethylene copolymer (HECO) of the second aspect has an ethylene content of the soluble fraction (C2(SF)), determined by CRYSTEX analysis, in the range from 20.0 to 40.0 wt.-%, more preferably in the range from 25.0 to 39.0 wt.-%, most preferably in the range from 30.0 to 38.0 wt.-%.

The heterophasic propylene-ethylene copolymer (HECO) of the second aspect preferably has an ethylene content of the crystalline fraction (C2(CF)), determined by CRYSTEX analysis, in the range from 0.0 to 7.0 wt.-%, more preferably in the range from 1.5 to 6.0 wt.-%, most preferably in the range from 3.0 to 5.0 wt.-%.

The heterophasic propylene-ethylene copolymer (HECO) of the second aspect preferably has a total ethylene content (C2(total)), determined by CRYSTEX analysis, in the range from 4.0 to 11.0 wt.-%, more preferably in the range from 5.0 to 10.0 wt.-%, most preferably in the range from 6.0 to 9.0 wt.-%.

The heterophasic propylene-ethylene copolymer (HECO) of the second aspect has an intrinsic viscosity of the soluble fraction (iV(SF)), determined by CRYSTEX analysis, in the range from 0.50 to 2.00 dL/g, more preferably in the range from 1.00 to 1.80 dL/g, most preferably in the range from 1.20 to 1.70 dL/g.

The heterophasic propylene-ethylene copolymer (HECO) of the second aspect preferably has an intrinsic viscosity of the crystalline fraction (iV(CF)), determined by CRYSTEX analysis, in the range from 1.00 to 3.00 dL/g, more preferably in the range from 1.50 to 2.70 dL/g, most preferably in the range from 1.90 to 2.40 dL/g.

It is a finding of the present invention that by selecting an appropriate visbreaking agent, low frequency dynamic rheological behaviour can be controlled in a manner that cannot be obtained via conventional means (i.e. control of the reactor conditions) or by normal visbreaking conditions. In addition to effecting visbreaking, peroxide radical initiators can promote the long chain branching (LCB), which particularly affects low frequency dynamic rheological behaviour.

The heterophasic propylene-ethylene copolymer (HECO) of the second aspect has a ratio between the storage modulus at 0.03 rad/s (G'_{0.03}) and at 0.01 rad/s (G'_{0.01}) [(G'_{0.03})(G'_{0.01})], both determined according to ISO 6721-10 at 230 °C, in the range from 1.0 to 4.0, more preferably in the range from 1.3 to 3.5, most preferably in the range from 1.5 to 3.0.

The heterophasic propylene-ethylene copolymer (HECO) of the second aspect preferably has a phase angle (φ) value at a complex modulus (G*) of 30 Pa, determined by the method given in the measurement methods, of below 86 °, more preferably of below 84 °, most preferably of below 82 °.

The heterophasic propylene-ethylene copolymer (HECO) of the second aspect preferably comprises:
i) a crystalline matrix (M) being a propylene homopolymer; and
ii) an amorphous propylene-ethylene elastomer (E),
wherein the crystalline matrix component (M) is free from 2,1-regiodefects, as determined by quantitative ¹³C-NMR spectroscopy. The absence of 2,1-regiodefects is typical for polypropylenes polymerized using Ziegler-Natta catalysts.

Preferably, the heterophasic propylene-ethylene copolymer (HECO) has been polymerized in the presence of a Ziegler-Natta catalyst.

The heterophasic propylene-ethylene copolymer (HECO) of the second aspect preferably has a yellowness index, determined according to ISO 11664, in the range from -4.00 to -2.00, more preferably in the range from -3.90 to -3.00, most preferably in the range from -3.80 to - 3.40.

The heterophasic propylene-ethylene copolymer (HECO) of the second aspect preferably has a gel index, determined according to the method given in the measurement methods, in the range from 0 to 50, more preferably in the range from 0 to 20, most preferably in the range from 0 to 10.

The heterophasic propylene-ethylene copolymer (HECO) of the second aspect preferably has a content of low-boiling organic substances (LBS), determined according to the method given in the measurement methods, in the range from 0 to 150 µg/g, more preferably in the range from 0 to 100 µg/g, most preferably in the range from 0 to 70 µg/g.

The heterophasic propylene-ethylene copolymer (HECO) of the second aspect preferably has a content of high-boiling organic substances (HBS), determined according to the method given in the measurement methods, in the range from 0 to 150 µg/g, more preferably in the range from 0 to 100 µg/g, most preferably in the range from 0 to 70 µg/g.

The heterophasic propylene-ethylene copolymer (HECO) of the second aspect preferably has a total volume or organic compounds (TVOC), determined according to VDA277, in the range from 0 to 200 µgC/g, more preferably in the range from 50 to 170 µgC/g, most preferably in the range from 100 to 150 µgC/g.

The heterophasic propylene-ethylene copolymer (HECO) of the second aspect preferably has a fogging gravimetric, determined according to DIN 75201:2011-11 Method B, in the range from 0.00 to 0.30 mg, more preferably in the range from 0.05 to 0.24 mg, most preferably in the range from 0.10 to 0.18 mg.

The heterophasic propylene-ethylene copolymer (HECO) of the second aspect preferably has a tensile modulus, determined according to ISO 527-2 on a specimen of Tensile type 1A, in the range from 800 to 2000 MPa, more preferably in the range from 900 to 1700 MPa, most preferably in the range from 1000 to 1400 MPa.

The heterophasic propylene-ethylene copolymer (HECO) of the second aspect preferably has a tensile strength, determined according to ISO 527-2 on a specimen of Tensile type 1A, in the range from 10 to 50 MPa, more preferably in the range from 15 to 40 MPa, most preferably in the range from 20 to 30 MPa.

The heterophasic propylene-ethylene copolymer (HECO) of the second aspect preferably has a Charpy Notched impact strength at +23 °C, determined according to ISO 179 using 80×10×4 mm³ test bars injection-moulded in line with ISO 19069-2, in the range from 8.0 to 50.0 kJ/m², more preferably in the range from 10.0 to 30.0 kJ/m², most preferably in the range from 12.0 to 20.0 kJ/m².

The heterophasic propylene-ethylene copolymer (HECO) of the second aspect preferably has a Charpy Notched impact strength at -20 °C, determined according to ISO 179 using 80×10×4 mm³ test bars injection-moulded in line with ISO 19069-2, in the range from 2.0 to 15.0 kJ/m², more preferably in the range from 3.0 to 10.0 kJ/m², most preferably in the range from 4.0 to 7.0 kJ/m².

The heterophasic propylene-ethylene copolymer (HECO) of the second aspect preferably has a puncture energy at +23 °C, measured according to ISO 6603-2 using injection-moulded specimens of 60×60×2 mm³ and a test speed of 4.4 m/s, in the range from 15.0 to 50.0 J, more preferably in the range from 19.0 to 40.0 J, most preferably in the range from 22.0 to 30.0 J.

The heterophasic propylene-ethylene copolymer (HECO) of the second aspect preferably has a puncture energy at -20 °C, measured according to ISO 6603-2 using injection-moulded specimens of 60×60×2 mm³ and a test speed of 4.4 m/s, in the range from 10.0 to 50.0 J, more preferably in the range from 14.0 to 40.0 J, most preferably in the range from 18.0 to 30.0 J.

It is particularly preferred that the heterophasic propylene-ethylene copolymer (HECO) of the second aspect is obtainable, more preferably obtained, by the process according to the first aspect.

It is likewise particularly preferred that the heterophasic propylene-ethylene copolymer (HECO) produced according to the process of the first aspect is the heterophasic propylene-ethylene copolymer (HECO) of the second aspect.

### Films

In a final aspect, the present invention is directed to a film comprising at least 90 wt.-% of the heterophasic propylene-ethylene copolymer (HECO) according to the second aspect or the third aspect.

Preferably the film comprises at least 95 wt.-%, most preferably at least 98 wt.-%, of the heterophasic propylene-ethylene copolymer (HECO) according to the second aspect or the third aspect.

In addition to the heterophasic propylene-ethylene copolymer (HECO) according to the second aspect or the third aspect, the film may (e.g.) contain one or more further additives (A).

If present, the one or more additives (A) are provided in an amount in the range from 0.0 to 10.0 wt.-%, more preferably in the range from 0.0 to 5.0 wt.-%, most preferably in the range from 0.0 to 2.0 wt.-%, relative to the total weight of the film (F). In some embodiments, the one or more additives (A) are provided in an amount in the range from 0.01 to 10.0 wt.-%, more preferably in the range from 0.01 to 5.0 wt.-%, most preferably in the range from 0.01 to 2.0 wt.-%, relative to the total weight of the film (F).

The selection of suitable additives for the film (F) is within the general knowledge of the person skilled in the art.

For example, the one or more additives (A) may be selected from the group consisting of antioxidants, stabilizers, fillers, nucleating agents, acid scavengers, and antistatic agents.

Such additives are generally commercially available and are described, for example, in "Plastic Additives Handbook", pages 871 to 873, 5th edition, 2001 of Hans Zweifel.

It is understood that the content of additives (A), given with respect to the total weight of the film (F), includes any carrier polymers used to introduce the additives to said film (F), i.e. masterbatch carrier polymers. An example of such a carrier polymer would be a polypropylene homopolymer in the form of powder.

It is preferred that the film of the final aspect has a gel index, determined according to the method given in the measurement methods, in the range from 0 to 50, more preferably in the range from 0 to 20, most preferably in the range from 0 to 10.

### EXAMPLES

### 1. Measurement methods

The following definitions of terms and determination methods apply for the above general description of the invention including the claims as well as to the below examples unless otherwise defined.

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR₂ of polypropylene was determined at a temperature of 230 °C and a load of 2.16 kg.

### CRYSTEX analysis

### Crystalline and soluble fractions method

The crystalline (CF) and soluble fractions (SF) of the heterophasic polypropylene-ethylene copolymers (HECO) and random heterophasic polypropylene-ethylene copolymers (RAHECO) as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH₃ stretching vibration (centred at app. 2960 cm⁻¹) and the CH stretching vibration (2700-3000 cm⁻¹) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by ¹³C-NMR) and each at various concentrations, in the range of 2 and 13mg/ml. To encounter for both features, concentration and ethylene content at the same time for various polymer concentrations expected during CRYSTEX analyses the following calibration equations were applied: Conc = a + b*Abs(CH) + c*(Abs(CH))2 + d*Abs(CH3) + e*(Abs(CH3)2 + f*Abs(CH)*Abs(CH3) CH3/1000C = a + b*Abs(CH) + c* Abs(CH3) + d * (Abs(CH3)/Abs(CH)) + e * (Abs(CH3)/Abs(CH))2

The constants a to e for equation 1 and a to f for equation 2 were determined by using least square regression analysis.

The CH₃/1000C is converted to the ethylene content in wt.-% using following relationship: $Wt . - % \left(Ethylene in EP Copolymers\right) = 100 - {CH}_{3} / 1000 TC * 0.3$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear: $Wt . - % XS = 1 , 01 * Wt . - % SF$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear: $IV \left(dL/g\right) = a * Vsp / c$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0.05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

Quantification of microstructure by NMR spectroscopy (for CRYSTEX calibration) Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,1,2,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer: $fE = \left(E\right) / \left(P+E\right)$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction: $E \left[mol-%\right] = 100 * fE$

The weight percent comonomer incorporation was calculated from the mole fraction: $E \left[wt.-%\right] = 100 * \left(fE*28.06\right) / \left(\left(fE*28.06\right)+\left(\left(1-fE\right)*42.08\right)\right) .$

### Rheological parameters

The characterization of polymer melts by dynamic shear measurements complies with ISO standards 6721-1 and 6721-10. The measurements were performed on a rotational rheometer MCR501 from Anton Paar, equipped with a 25 mm parallel plate geometry. Measurements were undertaken on compression moulded plates using nitrogen atmosphere and setting a strain within the linear viscoelastic regime. The oscillatory shear tests were done at 190 °C applying a frequency range between 0.01 and 600 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by $γ \left(t\right) = {γ}_{0} sin \left(ωt\right)$

If the applied strain is within the linear viscoelastic regime, the resulting sinusoidal stress response can be given by $σ \left(t\right) = {σ}_{0} sin \left(ωt+ϕ\right)$ where σ₀, and γ₀ are the stress and strain amplitudes, respectively; ω is the angular frequency; ϕ is the phase shift (a.k.a. phase angle, i.e. the loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, η*, the dynamic shear viscosity, η', the out-of-phase component of the complex shear viscosity, η" and the loss tangent, tan η, which can be expressed as follows: $G ′ = \frac{{σ}_{0}}{{γ}_{0}} cosϕ \left[Pa\right]$ $G ′ ′ = \frac{{σ}_{0}}{{γ}_{0}} sinϕ \left[Pa\right]$ ${G}^{∗} = G ′ + iG " \left[Pa\right]$ ${η}^{∗} = η ′ + iη " \left[Pa⋅s\right]$ $η ′ = \frac{G "}{ω} \left[Pa⋅s\right]$ $η " = \frac{{G}^{′} ′}{ω} \left[Pa⋅s\right]$

The determination of so-called Shear Thinning Index, which correlates with MWD and is independent of Mw, is done as described in equation 9. ${SHI}_{\left(x/y\right)} = \frac{{Eta}^{∗} for \left({G}^{∗}=x kPa\right)}{{Eta}^{∗} for \left({G}^{∗}=y kPa\right)}$

For example, the SHI_{(2.7/210)} is defined by the value of the complex viscosity, in Pa s, determined for a value of G* equal to 2.7 kPa, divided by the value of the complex viscosity, in Pa s, determined for a value of G* equal to 210 kPa and the SHI_{(5/200)} is defined by the value of the complex viscosity, in Pa s, determined for a value of G* equal to 5 kPa, divided by the value of the complex viscosity, in Pa s, determined for a value of G* equal to 200 kPa.

The values of storage modulus (G'), loss modulus (G"), complex modulus (G*) and complex viscosity (η*) were obtained as a function of frequency (ω).

Thereby, e.g. η*_{300rad/s} (eta*_{300rad/s}) is used as abbreviation for the complex viscosity at the frequency of 300 rad/s and η*_{0.05rad/s} (eta*_{0.05rad/s}) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. tan_{0.05} is used as abbreviation for the ratio of the loss modulus (G") and the storage modulus (G') at 0.05 rad/s and tan₃₀₀ is used as abbreviation for the ratio of the loss modulus (G") and the storage modulus (G') at 300 rad/s. The elasticity balance tan_{0.05}/tan₃₀₀ is defined as the ratio of the loss tangent tan_{0.05} and the loss tangent tan₃₀₀.

Besides the above mentioned rheological functions one can also determine other rheological parameters such as the so-called elasticity index *EI(x).* The elasticity index *Ei(x)* is the value of the storage modulus, G' determined for a value of the loss modulus, G" of x kPa and can be described by equation 10. $EI \left(x\right) = G ′ for \left(G"=x kPa\right) \left[Pa\right]$

For example, the EI(5kPa) is the defined by the value of the storage modulus G', determined for a value of G" equal to 5 kPa.

The polydispersity index, *PI,* is defined by equation 11. $PI = \frac{{10}^{5}}{G ′ \left({ω}_{COP}\right)} , {ω}_{COP} = ω for \left(G′=G"\right)$ where ω_{COP} is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

### References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

### Tensile Properties

The tensile properties (tensile modulus, tensile strength) were determined according to ISO 527-2 method B on 1A ISO 527-2 dogbone specimens. Following the standard, a testspeed of 1mm/min was used for tensile modulus and 50mm/min for all other properties. The testing temperature was 23±2° C. Injection moulding was carried out according to ISO 19069-2 on the injection moulding machine Engel VC 200/60 tech with a screw diameter of 22 mm.

### Charpy impact strength (NIS)

Charpy notched impact strength was determined according to ISO 179-1/1eA on notched specimen of 80 mm ×10 mm × 4 mm (specimen according to ISO 179-1/1eA). Testing temperatures were 23±2° C or -20±2° C. Injection moulding was carried out to prepare the specimens according to ISO 19069-2 on the injection moulding machine Engel VC 200/60 tech with a screw diameter of 22 mm.

### Puncture energy

Maximum force, deflection at maximum force, energy to maximum force, puncture deflection and puncture energy were determined in the instrumented puncture impact behavior test according to ISO 6603-2. The specimens were injection moulded plaques according to ISO 19069-2 and cut to dimensions of 60 mm × 60 mm × 2 mm. The testing conditions used were: impact velocity of 4.4 m/s, with 20 mm diameter lubricated striker, at 23±2°C or 20±2°C. The specimens were clamped with a support ring of 40 mm diameter.

### Screening of organic emissions by thermo-desorption analysis (LBS and HBS)

This method describes the semi-quantitative determination of organic compounds emitting from polyolefins. It is similar to the VDA 278 (October 2011) but includes specific adjustments. Directly after the production, the sample (injection moulded plaque, DIN-A5) was sealed in an aluminium-coated polyethylene bag and provided to the lab within 14 days. In the lab, it was stored openly for 7 days below 25 °C. After this period, an aliquot of 60 ± 5 mg was prepared from the stored sample. Trimming the aliquot should aim for a maximum coherent area. It was not the aim to create the largest possible surface area by cutting the aliquot into smaller pieces. The diameter of the sample injection tube should be used first. Length and thickness should be chosen accordingly, considering the specified aliquot weight. The aliquotwas directly desorbed using heat and a flow of helium gas. Volatile and semi-volatile organic compounds were extracted into the gas stream and cryo-focused prior to the injection into a gas chromatographic (GC) system for analysis. The method comprised two extraction stages: In the analysis of low-boiling substances (LBS) the aliquot was desorbed at 90 °C for 30 min to determine volatile organic compounds in the boiling / elution range up to n-C25 (n-pentacosane). The analysis of high-boiling substances (HBS) involved a further desorption step of the same aliquot at 120 °C for 60 min to determine semi-volatile compounds in the boiling / elution range from n-C14 (n-tetradecane) to n-C32 (n-dotriacontane).

Similar to the VOC and FOG value in the VDA 278, the LBS was calculated as toluene equivalent (TE) and the HBS was calculated as hexadecane equivalent (HE) applying a semi-quantitation and a respective calibration. The result was expressed in "µg/g".

Integration parameters for the LBS and HBS evaluation were chosen in such way that the "area reject" corresponds to the area of 1 µg/g (TE and HE, respectively). Thus, smaller peaks do not add to the semi-quantitative result. The GC oven program was kept the same, no matter if a calibration run, an LBS run or an HBS run was performed. It started at 50 °C (1 min hold), followed by a ramp of 10 °C/min and an end temperature of 320 °C (10 min hold). For the GC column an Agilent DB5: 50 m x 250 µm x 0.25 µm (or comparable) was used. The method requires a Thermal Desorption System TDS 3 (Gerstel) and a Cooled Injection System CIS 4 (Gerstel) as well as a GC system with a flame ionisation detector (FID) but does not involve a mass spectrometer. Instead of 280 °C the CIS end temperature is always set to 380 °C.

### Fogging

Fogging was measured according to ISO 75201:2011-11, method B (gravimetric method) on specimens (diameter 80 mm +/- 1mm, thickness 2 mm) cut out from a compression-moulded plate. With this method, the mass of fogging condensate on aluminium foil in mg by means weighing of foil before and after the fogging test is determined. The term "fogging" refers to a fraction of volatile substances condensed on glass parts as e.g. the windscreen of a vehicle.

### Total volume of organic compounds (TVOC):

The TVOC value (also known as total carbon emission) was determined according to VDA 277 January 1995.

### Yellowness index

Yellowness Index was determined according to ASTM E 313 on pellets.

### Gel index

The cast film samples have been produced and optically examined on a small-scale laboratory cast film line with installed camera detection from Optical Control Systems GmbH.

The line consists of an extruder with a Ø 25 mm screw with an L/D ration of 25. The extruder temperature zones were set at 220°C, 230°C, 240°C, 250°C, and 260°C, and the melt temperature was 240 °C. The extruder is followed by a die with a width of 150 mm and a fixed die gap of 0,5 mm. The film has been produced with a thickness of 70 µm. During the extrusion the chill-roll temperature has been set at 20 °C. The spots of the film have been detected and counted on 10 m² of the film during the extrusion process with transmitted light and a 4096 pixel camera. During the measurement, a LED light source is used. The resolution of the camera is x/y 25 µm on film. The gels, contaminations and others were divided into 4 size-classes (100-299 µm; 300-599 µm; 600-1000 µm; >1000 µm) and the results are presented as the number of defects per square meter (1/m2). In general, gels are detected if the grey value of certain pixels is below 15% but higher than 5% of the average grey value, while contaminations are detected below 5% of the average grey value. The "gel index" is calculated by multiplying the amount of gels in each size class by certain factors for each size class (0.1; 1; 5; 10) and adding these values together.

### Method for calculating the solubility parameter (SP) of peroxides at 225 °C

The solubility parameters (SPs) of peroxides were estimated using group contribution methods that rely on additive principles to calculate the contributions of molecular groups to the SP and its components. Among the most established methodologies for calculating SP are the Hoftyzer-Van Krevelen and Hoy methods. These approaches utilize tabulated group contribution data to determine the dispersion (*δ_{d}*), polar (*δₚ*), and hydrogen bonding (*δₕ*) components of the SP, as described in "Properties of Polymers" by Van Krevelen, edited by Te Nijenhuis (2009).

Both the Hoftyzer-Van Krevelen method and the Hoy method provide estimates with a typical accuracy within 10% of experimental values. When combined by averaging their outputs, these methods offer a reliable estimation of SP. However, the SP values generated by these methods are valid at 25 °C. To extend the applicability of the calculated SP values to other temperatures, such as 225 °C, the temperature dependence of the solubility parameters can be considered, as described by Hansen and Beerbower (1971). The temperature dependency is handled using data principles described in Van Krevelen, specifically addressing the differing temperature dependencies of the SP components through individual adjustments using Eq. 7.19 in "Properties of Polymers" by Van Krevelen, edited by Te Nijenhuis (2009). For the calculation, the temperature of 225°C was chosen to reflect a temperature closer to the melt during the visbreaking process, though it may not be the exact melt temperature.

### Calculation steps:

### 1. Calculation of SP at 25 °C Using the Hoftyzer-Van Krevelen Method:

∘ The group contribution data provided in Table 7.10 (page 215) of "Properties of Polymers" by Van Krevelen, edited by Te Nijenhuis (2009) was used to estimate the dispersion (*δ_{d}*)*,* polar (*δₚ*), and hydrogen bonding (*δₕ*) components of the SP. If two identical polar groups are present in a symmetrical position, then *δ_{g}* can be multiplied by a symmetry factor. However, this effect was not taken into account, and the value of *δₚ* was not multiplied by a symmetry factor.
∘ Interested readers are referred to Example 7.3 (page 216) in "Properties of Polymers" by Van Krevelen, edited by Te Nijenhuis (2009), for additional details on the calculation process.

### 2. Calculation of SP at 25 °C Using the Hoy Method:

∘ The used equations detailed in Table 7.11 (page 217) and the group contributions provided in Table 7.12 of "Properties of Polymers" by Van Krevelen, edited by Te Nijenhuis (2009) were employed to calculate the dispersion (*δ_{d}*)*,* polar (*δₚ*), and hydrogen bonding (*δₕ*) components.
∘ Interested readers are referred to Example 7.4 (page 217) and Example 7.5 (218) in Van Krevelen for additional details on the calculation process.

### 3. Averaging of Results:

∘ The individual SP components (*δₚ, δₚ, δₕ*) obtained from the Hoftyzer-Van Krevelen *(H - VK)* and Hoy methods at 25 °C were averaged separately: ${δ}_{d} \left(avg\right) = \frac{{δ}_{d} \left(H-VK\right) + {δ}_{d} \left(Hoy\right)}{2}$ ${δ}_{p} \left(avg\right) = \frac{{δ}_{p} \left(H-VK\right) + {δ}_{p} \left(Hoy\right)}{2}$ ${δ}_{h} \left(avg\right) = \frac{{δ}_{h} \left(H-VK\right) + {δ}_{h} \left(Hoy\right)}{2}$

### 4. Adjustment of SP to 225 °C:

∘ The temperature dependence of the solubility parameters was accounted for, and each SP component (*δ_{d}*(*avg*)*, δₚ*(*avg*)*, δₕ*(*avg*)) was adjusted individually using the coefficient of thermal expansion (CTE) of peroxides. ${\left(\frac{\partial {δ}_{d}}{\partial T}\right)}_{P} = - 1.25 {αδ}_{d}$ ${\left(\frac{\partial {δ}_{p}}{\partial T}\right)}_{P} = - 0.5 {αδ}_{p}$ ${\left(\frac{\partial {δ}_{h}}{\partial T}\right)}_{P} = - {δ}_{h} \left(1.22∗{10}^{- 3}+0.5α\right)$ where *α* is the coefficient of linear thermal expansion (CTE). For all the peroxides (P1-P7, see later), a CTE value of 0.00060033 C⁻¹ has been used.
∘ Using the adjusted SP component values (*δ_{d}*(avg, 225 °C), *δₚ*(avg, 225 °C), *δₕ*(avg, 225 °C)), the total SP at 225 °C (*δ*(225 °C)) was calculated: $δ \left(225 °C\right) = \sqrt{{δ}_{d} {\left(avg,225 °C\right)}^{2} + {δ}_{p} {\left(avg,225 °C\right)}^{2} + {δ}_{h} {\left(avg,225 °C\right)}^{2}}$

### Peroxide half-life

The half-life (*t*_{1/2}) of peroxides at different temperatures can be calculated using the equation below ${t}_{1 / 2} = ln \left(2\right) / {k}_{d}$ where *k_{d}* is the rate constant for the peroxide dissociation. *k_{d}* can be calculated using the Arrhenius equation (see below): ${k}_{d} = A ∗ {e}^{- {E}_{a} / \left(RT\right)}$
*k_{d}=* rate constant for the peroxide dissociation in s⁻¹
A = Arrhenius frequency factor in s⁻¹
*Eₐ*= Activation energy for the initiator dissociation in J/mol
R = 8.3142 J/(mol * K)
T = temperature in Kelvin
*t*_{1/2}*=* half-life in s

The Arrhenius frequency factor (A) and activation energy (*Eₐ*) of peroxides are readily available in brochures from various peroxide manufacturers and in the scientific literature.

### 2. Examples

### 2.1 Synthesis of precursor heterophasic propylene-ethylene copolymer (HECO-P)

For the polymerization process of HECO-P, the commercially available catalyst ZN180 of Basell was employed.

The catalyst system defined above was used in combination with triethyl-aluminium (TEAL) as co-catalyst and dicyclopentadienyl-dimethoxy silane (Donor D) as external donor.

The subsequent polymerization has been effected under the following conditions.

**Table 1 Polymerization conditions for the precursor heterophasic propylene-ethylene copolymer**

| | | **HECO-P** |
|---|---|---|
| **Prepolymerization** | | |
| [Co]/[ED] | [mol/mol] | 8 |
| [Co]/[Ti] | [mol/mol] | 280 |
| Temperature | [°C] | 25 |
| Residence time | [min] | 20 |

| **Loop reactor** | | |
|---|---|---|
| Temperature | [°C] | 75 |
| Split | [wt.-%] | 45 |
| H2/C3 | [mol/kmol] | 0.25 |
| C2/C3 | [mol/kmol] | 0 |
| MFR₂ | [g/10 min] | 0.60 |
| C2 | [wt.-%] | 0.0 |

| **1^{st} Gas phase reactor** | | |
|---|---|---|
| Temperature | [°C] | 80 |
| Split | [wt.-%] | 40 |
| H2/C3 | [mol/kmol] | 3.7 |
| C2/C3 | [mol/kmol] | 0 |
| MFR₂ | [g/10 min] | 0.60 |
| XCS | [wt.-%] | 1.5 |
| C2 | [wt.-%] | 0.0 |

| **2^{nd} Gas phase reactor** | | |
|---|---|---|
| Temperature | [°C] | 75 |
| Split | [wt.-%] | 14 |
| H2/C3 | [mol/kmol] | 425 |
| C2/C3 | [mol/kmol] | 858 |

| **Final Properties (pellet)** | | |
|---|---|---|
| MFR₂ | [g/10 min] | 0.68 |
| SF | [wt.-%] | 15 |
| CF | [wt.-%] | 85 |
| C2(total) | [wt.-%] | 7.9 |
| C2(SF) | [wt.-%] | 36.9 |
| C2(CF) | [wt.-%] | 4.2 |
| iV | [dL/g] | 3.11 |
| iV(SF) | [dL/g] | 2.03 |
| iV(CF) | [dL/g] | 3.17 |
| 2,1-regiodefects | [mol-%] | 0.0 |
| Tm | [°C] | 163.5 |
| Tens Mod | [MPa] | 1125 |
| Tens Str | [MPa] | 24.6 |
| Charpy(+23°C) | [kJ/m²] | 30.3 |
| Charpy(-20°C) | [kJ/m²] | 3.9 |
| Puncture(+23°C) | [J] | 26.6 |
| Puncture(-20°C) | [J] | 30.2 |

The final properties given in Table 1 of HECO-P were measured on pellets produced as RE1 below.

### 2.2 Visbreaking experiments (HECO1)

HECO-P was visbroken to produce IE1 to IE4 and CE1 to CE3, using the following peroxides:
P1 tert-butylperoxy isopropyl carbonate (available as Peroxan BIC from Pergan, Germany; CAS-No. 2372-21-6)
P2 2,2-di(tert-butylperoxy)butane (available as Trigonox D from Nouryon, Netherlands; CAS-No. 2167-23-9)
P3 bis(tert-butyldioxyisopropyl)benzene (available as Perkadox 14 from Nouryon, Netherlands; CAS-No. 25155-25-3)
P4 tert-butyl cumyl peroxide (available as Trigonox T from Nouryon, Netherlands; CAS-No. 3457-61-2)
P5 2,5-Bis(tert.-butylperoxy)-2,5-dimethylhexane (available as Luperox 101 from Arkema, France; CAS-No. 78-63-7)
P6 di-tert-amyl peroxide (available as Peroxan DA from Pergan, Germany; CAS-No. 10508-09-5)
P7 1,2,4,5,7,8-hexoxonane, 3,6,9-trimethyl-3,6,9-tris(Et and Pr) derivatives (available as Triogonox 501 from Nouryon, Netherlands; CAS-No 1613243-54-1)

The properties of the peroxides P1 to P7 are given in Table 2.

**Table 2 Peroxide properties**

| | Solubility Parameter at 225 °C [MPa^{1/2}] | Half-life at 225 °C [s] |
|---|---|---|
| **P1** | 15.23 | 0.15 |
| **P2** | 14.99 | 0.11 |
| **P3** | 15.10 | 0.93 |
| **P4** | 15.26 | 1.53 |
| **P5** | 14.08 | 0.83 |
| **P6** | 14.25 | 0.62 |
| **P7** | 14.47 | 3.94 |

Visbreaking experiments using HECO-P and peroxides (P1-P7) to produce RE1, IE1-IE4 and CE1-CE3 were performed in a co-rotating twin-screw extruder Coperion ZSK 18. The temperature profile of the extruder zones was set to 20, 180, 190, 200, 220, 220, 210 and 200 °C. In the case of liquid peroxides, the HECO1 were premixed with the liquid POXs and conditioned for 24 hours at room temperature. For the reactive extrusion, these "masterbatches" were used the same as the commercially solid POX formulations and were dosed directly to the polymer during the extrusion step. The following additives were added during the extrusion:
- 0.04 wt.-% Irganox 1010 (Pentaerythrityl-tetrakis(3-(3',5'-di-tert. butyl-4-hydroxyphenyl)-propionate, CAS-no. 6683-19-8) from BASF AG, Germany
- 0.07 wt.-% Irgafos 168 (Tris (2,4-di-t-butylphenyl) phosphite, CAS-no. 31570-04-4) from BASF AG, Germany
- 0.06 wt.-% of Ca-stearate (available from Faci, Italy; CAS-no.1592-23-0).

The properties of the visbroken heterophasic propylene-ethylene copolymers IE1 to IE4 and CE1 to CE3, as well as non-visbroken HECO1 (i.e. RE1) are given in Table 3.

As can be seen for IE1 to IE4, the yellowness index is lower than for any of CE1 to CE3, indicating the superiority of the peroxides P1 to P4 that have a higher calculated solubility parameter.

Furthermore, the inventive examples have generally improved gel index, especially for IE1, which employs P1. Likewise, the emission properties (LBS, HBS, Fogging and TVOC) are generally lower for IE1 than IE2 to IE4 and CE1 to CE3. IE1 also has considerably better mechanical properties (Tens Mod and NIS(23 °C)) than CE1, with considerably less degradation from the starting properties of HECO1.

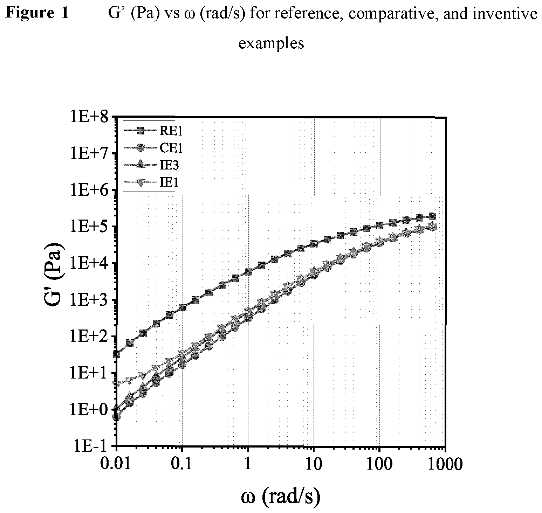

IE1, which is a particularly preferred embodiment of the present invention, has a distinctive slope of G' vs ω, as may be seen in Figure 1. This distinctive slope is reflected in the (G'_{0.03})/(G'_{0.01}) values given in Table 3.

**Table 3 Properties of visbroken heterophasic propylene-ethylene copolymers RE1, IE1 to IE4 and CE1 to CE3**

| | | **RE1** | **IE1** | **IE2** | **IE3** | **IE4** | **CE1** | **CE2** | **CE3** |
|---|---|---|---|---|---|---|---|---|---|
| Peroxide | [-] | - | P1 | P2 | P3 | P4 | P5 | P6 | P7 |
| HECO | [-] | HECO-P | HECO-P | HECO-P | HECO-P | HECO-P | HECO-P | HECO-P | HECO-P |
| Visbreaking ratio | [-] | - | 7.1 | 6.3 | 10.7 | 8.1 | 8.3 | 6.4 | 8.6 |
| MFR₂ | [g/10 min] | 0.68 | 4.83 | 4.26 | 7.27 | 5.49 | 0.68 | 5.66 | 4.38 |
| SF | [wt.-%] | 15 | 14 | 14.8 | 14.2 | 14.9 | 15 | 14.4 | 14.9 |
| CF | [wt.-%] | 85 | 86 | 85.2 | 85.8 | 85.1 | 85 | 85.6 | 85.1 |
| C2(total) | [wt.-%] | 7.9 | 7.7 | 8.6 | 7.5 | 8.8 | 7.9 | 7.9 | 8.7 |
| C2(SF) | [wt.-%] | 36.9 | 35.8 | 36.7 | 35.9 | 36 | 36.9 | 35.8 | 37.2 |
| C2(CF) | [wt.-%] | 4.2 | 3.6 | 4.4 | 3.8 | 4.3 | 4.2 | 4 | 4.7 |
| iV | [dL/g] | 3.11 | 2.06 | 2.1 | 2 | 2 | 3.11 | 2.01 | 2.1 |
| iV(SF) | [dL/g] | 2.03 | 1.5 | 1.7 | 1.4 | 1.5 | 2.03 | 1.5 | 1.5 |
| iV(CF) | [dL/g] | 3.17 | 2.12 | 2.2 | 2.1 | 2.1 | 3.17 | 2.07 | 2.2 |
| (G'_{0.03})/(G'_{0.01}) | [-] | 4.76 | 2.15 | n.m. | 4.67 | n.m. | 5.92 | n.m. | n.m. |
| Phase angle ϕ (at G* of 30 MPa) | [°] | n.m. | 80.8 | n.m. | 87.7 | n.m. | 87.9 | n.m. | n.m. |
| Tens Mod | [MPa] | 1125 | 1135 | n.m. | n.m. | n.m. | 1037 | n.m. | n.m. |
| Tens Str | [MPa] | 24.6 | 25.0 | n.m. | n.m. | n.m. | 23.6 | n.m. | n.m. |
| Charpy(+23°C) | [kJ/m²] | 30.3 | 13.9 | n.m. | n.m. | n.m. | 9.5 | n.m. | n.m. |
| Charpy(-20°C) | [kJ/m²] | 3.9 | 4.38 | 4.32 | 4.17 | 3.75 | 4.62 | 3.33 | 3.92 |
| Puncture(+23°C) | [J] | 26.6 | 25.7 | n.m. | n.m. | n.m. | 24 | n.m. | n.m. |
| Puncture(-20°C) | [J] | 30.2 | 19.0 | n.m. | n.m. | n.m. | 28.8 | n.m. | n.m. |
| LBS | [µg/g] | 40 | 66 | 167 | 107 | 163 | 82 | 93 | 158 |
| HBS | [µg/g] | 70 | 60 | 94 | 184 | 115 | 94 | 106 | 138 |
| TVOC | [µgC/g] | n.m. | 140 | >200 | 152 | 154 | 175 | >200 | 131 |
| Fogging | [mg] | 0.1 | 0.17 | n.m. | 0.37 | n.m. | 0.19 | n.m. | 0.20 |
| Yellowness index | [-] | 2 | -3.54 | -3 | -3.5 | -3.3 | -1.15 | -1.6 | -1.4 |
| Gel index | [-] | n.m. | 5.9 | 39.9 | 11.8 | 50.3 | 14.3 | 400.2 | 37.4 |

## Claims

1. A process for producing a heterophasic propylene-ethylene copolymer (HECO) having a melt flow rate (MFR₂), determined according to ISO 1133 at a temperature of 230 °C and a load of 2.16 kg, in the range from 1.0 to 20.0 g/10 min, comprising the following steps, in the given order:
a) providing a precursor heterophasic propylene-ethylene copolymer (HECO-P) having a melt flow rate (MFR₂), determined according to ISO 1133 at a temperature of 230 °C and a load of 2.16 kg, in the range from 0.10 to 5.0 g/10 min;
b) extruding a mixture of the precursor heterophasic propylene-ethylene copolymer (HECO-P) and one or more peroxide radical initiators (POX), thereby obtaining the heterophasic propylene-ethylene copolymer (HECO),
wherein each of the one or more peroxide radical initiators (POX) has a solubility parameter (SP), determined according to the method given in the measurement methods at 225 °C, of at least 14.6 MPa^{1/2}.

2. The process according to claim 1, wherein each of the one or more peroxide radical initiators (POX) has a half-life (t_{1/2}), determined according to the method given in the measurement methods at 225 °C, in the range from 0.05 to 2.00 s, more preferably in the range from 0.05 to 1.00 s, yet more preferably in the range from 0.05 to 0.50 s, most preferably in the range from 0.05 to 0.30 s.

3. The process according to claim 1 or claim 2, wherein each of the one or more peroxide radical initiators (POX) is selected from the group consisting of tert-butylperoxy isopropyl carbonate, 2,2-di(tert-butylperoxy)butane, tert-butyl cumyl peroxide, bis(tert-butyldioxyisopropyl)benzene, and mixtures thereof, most preferably only one peroxide radical initiator (POX) is used, which is tert-butylperoxy isopropyl carbonate.

4. The process according to any one of claims 1 to 3, wherein the visbreaking ratio [MFR₂(HECO)/MFR₂(HECO-P)] is greater than 1.0, more preferably in the range from 2.0 to 15.0, yet more preferably in the range from 4.0 to 12.0, most preferably in the range from 5.0 to 9.0.

5. The process according to any one of claims 1 to 4, wherein the precursor heterophasic propylene-ethylene copolymer (HECO-P) has one or more, preferably all, of the following properties:
a) a soluble fraction (SF) content, determined by CRYSTEX analysis, in the range from 5.0 to 20.0 wt.-% and a crystalline fraction (CF) content, determined by CRYSTEX analysis, in the range from 80.0 to 95.0 wt.-%;
b) an ethylene content of the soluble fraction (C2(SF)), determined by CRYSTEX analysis, in the range from 20.0 to 40.0 wt.-%;
c) an intrinsic viscosity of the soluble fraction (iV(SF)), determined by CRYSTEX analysis, in the range from 1.00 to 3.00 dL/g;
d) an ethylene content of the crystalline fraction (C2(CF)), determined by CRYSTEX analysis, in the range from 0.0 to 7.0 wt.-%;
e) an intrinsic viscosity of the crystalline fraction (iV(CF)), determined by CRYSTEX analysis, in the range from 2.00 to 4.00 dL/g; and
f) a total ethylene content (C2(total)), determined by CRYSTEX analysis, in the range from 4.0 to 11.0 wt.-%.

6. A heterophasic propylene-ethylene copolymer (HECO), having all of the following properties:
a) a melt flow rate (MFR₂), determined according to ISO 1133 at a temperature of 230 °C and a load of 2.16 kg, in the range from 1.0 to 20.0 g/10 min;
b) a soluble fraction (SF) content, determined by CRYSTEX analysis, in the range from 5.0 to 20.0 wt.-% and a crystalline fraction (CF) content, determined by CRYSTEX analysis, in the range from 80.0 to 95.0 wt.-%;
c) an ethylene content of the soluble fraction (C2(SF)), determined by CRYSTEX analysis, in the range from 20.0 to 40.0 wt.-%;
d) an intrinsic viscosity of the soluble fraction (iV(SF)), determined by CRYSTEX analysis, in the range from 0.50 to 2.00 dL/g; and
e) a ratio between the storage modulus at 0.03 rad/s (G'_{0.03}) and at 0.01 rad/s (G'_{0.01}) [(G'_{0.03})/(G'_{0.01})], both determined according to ISO 6721-10 at 230 °C, in the range from 1.0 to 4.0.

7. The heterophasic propylene-ethylene copolymer (HECO) according to claim 6, having a phase angle (δ) value at a complex modulus (G*) of 30 Pa, determined by the method given in the measurement methods, of below 86 °.

8. The heterophasic propylene-ethylene copolymer (HECO) according to claim 6 or claim 7, having one or more, preferably all, of the following properties:
a) an ethylene content of the crystalline fraction (C2(CF)), determined by CRYSTEX analysis, in the range from 0.0 to 7.0 wt.-%;
b) an intrinsic viscosity of the crystalline fraction (iV(CF)), determined by CRYSTEX analysis, in the range from 1.00 to 3.00 dL/g; and
c) a total ethylene content (C2(total)), determined by CRYSTEX analysis, in the range from 4.0 to 11.0 wt.-%.

9. The heterophasic propylene-ethylene copolymer (HECO) according to any one of claims 6 to 8, having one or more, preferably all, of the following properties:
a) a yellowness index, determined according to ISO 11664, in the range from -4.00 to -2.00;
b) a gel index, determined according to the method given in the measurement methods, in the range from 0 to 50;
c) a content of low-boiling organic substances (LBS), determined according to the method given in the measurement methods, in the range from 0 to 150 µg/g;
d) a content of high-boiling organic substances (HBS), determined according to the method given in the measurement methods, in the range from 0 to 150 µg/g;
e) a total volume or organic compounds (TVOC), determined according to VDA277, in the range from 0 to 200 µgC/g; and
f) a fogging gravimetric, determined according to DIN 75201:2011-11 Method B, in the range from 0.00 to 0.30 mg.

10. The heterophasic propylene-ethylene copolymer (HECO) according to any one of claims 6 to 9, having one or more, preferably all, of the following properties:
a) a tensile modulus, determined according to ISO 527-2 on a specimen of Tensile type 1A, in the range from 800 to 2000 MPa;
b) a tensile strength, determined according to ISO 527-2 on a specimen of Tensile type 1A, in the range from 10 to 50 MPa;
c) a Charpy Notched impact strength at +23 °C, determined according to ISO 179 using 80×10×4 mm³ test bars injection-moulded in line with ISO 19069-2, in the range from 8.0 to 50.0 kJ/m²;
d) a Charpy Notched impact strength at -20 °C, determined according to ISO 179 using 80×10×4 mm³ test bars injection-moulded in line with ISO 19069-2, in the range from 2.0 to 15.0 kJ/m²;
e) a puncture energy at +23 °C, measured according to ISO 6603-2 using injection-moulded specimens of 60×60×2 mm³ and a test speed of 4.4 m/s, in the range from 15.0 to 50.0 J; and
f) a puncture energy at -20 °C, measured according to ISO 6603-2 using injection-moulded specimens of 60×60×2 mm³ and a test speed of 4.4 m/s, in the range from 10.0 to 50.0 J.

11. The heterophasic propylene-ethylene copolymer (HECO) according to any one of claims 6 to 10, which is obtainable, more preferably obtained, by the process according to any one of claims 1 to 5.

12. The process according to any one of claims 1 to 5, wherein the heterophasic propylene-ethylene copolymer (HECO) obtained in step b) is the heterophasic propylene-ethylene copolymer (HECO) according to any one of claims 6 to 10.

13. A heterophasic propylene-ethylene copolymer (HECO), which is obtainable, more preferably obtained, by the process according to any one of claims 1 to 5.

14. A film comprising at least 90 wt.-% of the heterophasic propylene-ethylene copolymer (HECO) according to any one of claims 6 to 11 or 13.

15. The film according to claim 14, having a gel index, determined according to the method given in the measurement methods, in the range from 0 to 50.
